# EUROPEAN PATENT APPLICATION

(11) **EP 1 658 892 A1**
(43) Date of publication of application: **24.05.2006**
(21) Application number: 04027271.8
(22) Date of filing: 17.11.2004
(51) Int. Cl.: B01J 19/00, B01J 19/12

(54) **Reactor for hot thermal or thermo-chemical material processes with cleaning capability and method for cleaning a hot inner surface of a reactor used for hot thermal or thermo-chemical material processes**

(71) Applicant: PAUL SCHERRER INSTITUT, 5232 Villigen PSI (CH)
(72) Inventor: Müller, Reto, 8005 Zürich (CH); Häberling, Peter, 5313 Klingnau (CH); Palumbo, Robert, Prof. Dr., 5200 Brugg (CH); Sturzenegger, Marcel, 5408 Ennetbaden (CH)
(74) Representative: Fischer, Michael

(57) **Abstract**

It is the aim of the present invention to provide a reactor and a method for thermal or thermo-chemical processing of different materials at high temperatures where the necessity for the cleaning of hot inner surfaces, such as windows, can be easily solved without suspending the process.

This aim is achieved according to the present invention by a reactor for hot thermal or thermo-chemical material processes converting a raw material at least partially into a desired product, comprising:
a) a cavity having a hot inner surface; said cavity being disposed in a containment can,
b) said cavity having at least one gas inlet and at least one gas outlet,
c) a feeder mechanism for supplying the raw material subject to the thermal or thermo-chemical material process;
d) said at least one gas inlet is formed for injecting a gas flow towards at least a part of the hot inner surface; and
e) the gas or at least one component thereof is chosen to convert the undesired condensed product into a compound having a higher volatility at reaction temperature than the undesired product itself.

This allows to clean the hot inner surfaces without suspending the thermal and/or thermo-chemical material process since the suitable gas can be introduced *in situ*. By injecting the gas flow towards the inner surface to be cleaned the removal/reconversion of the product can be limited to the extent necessary. By controlling the flow rate of the gas flow any negative impact of an excess amount of gas injected can be avoided.

## Description

The invention relates to a reactor for hot thermal or thermo-chemical material processes converting a raw material at least partially into a desired product. The invention further relates to a method for cleaning a hot inner surface of a reactor used for hot thermal or thermo-chemical material processes converting a raw material at least partially into a desired product.

In many chemical processes, solids need to be heated to high temperatures for the chemical reaction to proceed. If the reaction temperature is exceeding the operating temperature of conventional metals like steel, the apparatus has to be made from alternative high-temperature resistant materials. Examples of such energy-intensive high-temperature processes with considerable CO₂ emissions are the processing of lime and cement as well as the reduction of metal oxides as well as the decomposition of organic materials, such as crude oil, bio mass or other material suited to deliver various organic fuels or organic gases.

Different types of reactors are known for this purposes, even solar rotary kilns. However, and despite of the generation of the desired product from the raw material, a relevant portion of the desired product is deposited on the hot inner surfaces of the reactor. These reactors usually have apertures, enclosed by a window, to control the thermal and/or thermo-chemical process, i.e. prevent ambient air from entering the reactor. Unfortunately, these apertures (windows) are as well subject to undesired deposition like the other inner surfaces of the reactor. Very often the windows are cooled for protecting them from fair wear and tear which increases the potential for product condensation on this still hot but significantly colder surface. Ongoing deposition will therefore jeopardize these functionalities and it is therefore required to clean at least those windows from time to time.

For cleaning the window, the window usually has to be removed from the reactor and therefore, the thermal and/or thermo-chemical material process has to be suspended during the cleaning period.

Therefore, it is the aim of the present invention to provide a reactor and a method for thermal or thermo-chemical processing of different materials at high temperatures where the necessity for the cleaning of hot inner surfaces, such as windows, can be easily solved without suspending the material process.

This aim is achieved according to the present invention by a reactor for hot thermal or thermo-chemical material processes converting a raw material at least partially into a desired product, comprising:
a) a cavity having a hot inner surface; said cavity being disposed in a containment can,
b) said cavity having at least one gas inlet and at least one gas outlet,
c) a feeder mechanism for supplying the raw material subject to the thermal or thermo-chemical material process;
d) said at least one gas inlet is formed for injecting a gas flow towards at least a part of the hot inner surface; and
e) the gas that would be used as needed to clean the window chosen to convert a deposited product on the window, a product that is often undesired to the desired product which has a higher volatility at reaction temperature than the undesired product itself.

In all cases, undesired means a product that formed where it should not form if one is to ensure proper operation of the device. In some cases, the actual compound that forms is truly an undesired compound that formed from a recombination reaction. For example when zinc is produced from zinc oxide, zinc oxide may form on an undesired surface. Here the zinc oxide too as a compound was undersired. The process does two good things: it cleans the surface can produces a desired chemical compound. But sometimes one is trying to produce a metal that condenses on an undesired surface. By oxidizing some metals from the surface, the surface is cleaned, because a few metals have oxides with higher vapour pressures than the metal itself. In this particular case the objective of a clean surface was reached, but the metal oxide that forms is not ultimately the desired final product. In such a case a compromise was made, a clean surface to keep the process running but the formation of a small amount of undesired product.

With respect to the method according to the present invention a method for cleaning a hot inner surface of a reactor used for hot thermal or thermo-chemical material processes converting a raw material at least partially into a desired product is used, said method comprising:
a) providing a cavity having a hot inner surface; said cavity being disposed in a containment can,
b) providing said cavity having at least one gas inlet and at least one gas outlet,
c) providing a feeder mechanism for supplying the raw material subject to the thermal or thermo-chemical material process;
d) forming said at least one gas inlet for injecting a gas flow towards at least a part of the hot inner surface; and
e) choosing the gas or at least one component thereof for converting the undesired product that formed onto the window into a compound having a higher volatility at reaction temperature than the undesired depositedproduct itself.

Both the reactor and the method allow to clean the hot inner surfaces without suspending the thermal and/or thermo-chemical material process since the suitable gas can be introduced in *situ.* By injecting the gas flow towards the inner surface to be cleaned the removal/re-conversion of the product can be limited to the extent necessary. By controlling the flow rate of the gas flow any negative impact of an excess amount of gas injected can be avoided.

Typically, said at least part of the hot inner surface can be an aperture for allowing optical access to the cavity. Said aperture can be enclosed by a hot quartz reactor window. Advantageously, the aperture can be used to insert the external radiation heat into the cavity while preventing the flow through the aperture of ambient air.

A preferred embodiment according to the present invention uses zinc oxide as a component of the raw material or as the raw material. Accordingly, the gas comprises carbon monoxide which reduces the zinc oxide formed on the window into zinc which then vaporizes off the window. In another suitable example the raw material may comprise a component selected from a group consisting of manganese oxide, iron oxide and molybdenum oxide and the gas may comprise oxygen. In a further example the raw material may comprise organic compounds and the gas may comprise water vapour.

Even under the *in situ* injection of the gas flow, the gas flow may be injected continuously or periodically during the hot thermal or thermo-chemical material process. It is therefore possible to control the flow rate in the dependency of the parasitic deposition of the product which has to be removed from the inner surface. When this parasitic deposition can be measured automatically, a simple control algorithm for the flow rate of the "cleaning" gas can be established in order to clean the inner surface also automatically.

The reactor is generally suited for all thermal and/or thermo-chemical material processes which allows to use as the feed material any type of organic, inorganic, metallic, or ceramic solids, as well as mixtures of them, which are then subject to said thermal and/or said thermo-chemical material processing. Especially, fine-grained materials, such as zinc oxide, are preferred to generate a reaction product, such as zinc. Therefore, the reactor according to this invention is particularly suited for the clean processing of a variety of fine-grained materials at temperatures exceeding 1500 K. Utilizing this invention, some processing operations, which are currently carried out in direct-fired rotary kilns, for example that of lime production, may be more economical due to energy savings and other benefits of the reactor design of this invention.

Further advantageous features result from the dependent claims, the following description, and the drawings.

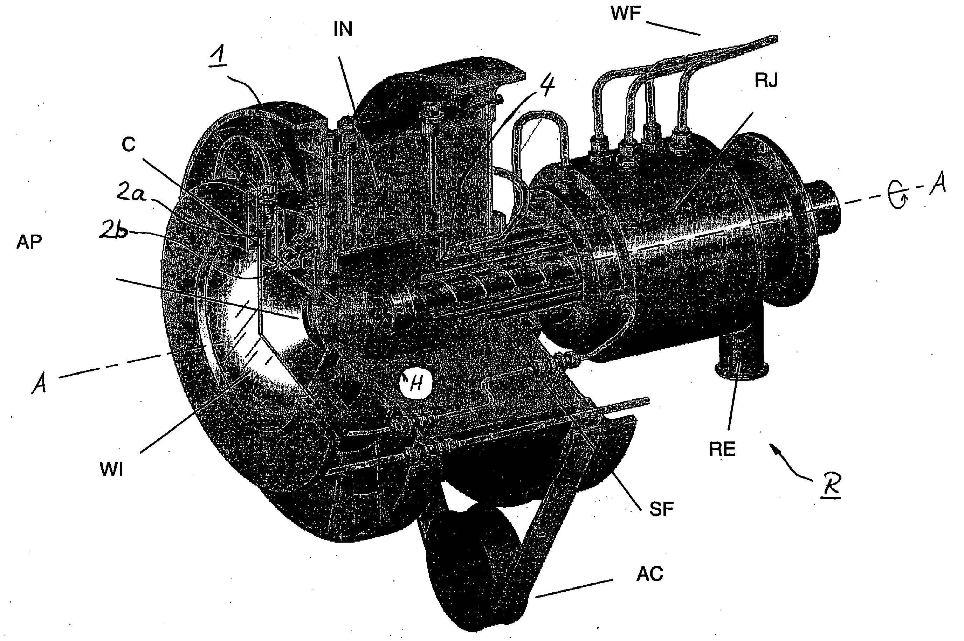

For one preferred embodiment of a reactor according to the present invention, the principle of the invention is described and illustrated in the appended drawing. The figure is a schematic cross-sectional perspective view of an embodiment of a reactor R. The reactor R according to the present invention comprises a containment can 1 that can be rotated around its longitudinal axis A-A by means of an external driving mechanism AC. The rotation speed has a significant impact on the residence time of the feed material in the reactor R, in detail in the material flow path of the reactor R. Within the containment can 1, a high-temperature resistant thermal insulation layer IN is tightly mounted. This insulation layer IN designs a cavity C into which external radiation can be introduced via an aperture AP which is sealed by a quartz window WI.

The feed material, in this specific embodiment zinc oxide as fine-grained solid material, is fed through a screw feeder SF 10 into the cavity C. The screw feeder SF has a head portion H, which is formed as a water cooled copper head with a zirconia heat insulation. This insulated head portion H prevents the heat from the cavity C from entering into the inner volume of screw feeder SF which hosts the screw device SD. The zinc oxide particle are fed into the cavity C in a semi-continuous manner and are distributed in a thin layer evenly along the wall of the cavity C due to the centripetal acceleration of the cavity C. The particles are thus heated directly by solar radiation that enters the cavity and, of course, the particles are heated indirectly by the hot wall of the cavity C. The chemical reaction, here the thermal, or if desired, the carbo-thermal decomposition of ZnO, is thus taking place on a large surface area of particles. Due to the large exposed surface area of the reactants and due to the very small temperature gradient within the cavity C, for which SiC or Hafnium is an excellent thermal conductor, high decomposition rates are achieved. The predominant portion of the zinc remains in its gaseous state within the cavity C and is dragged out of the cavity C with the inert gas being preheated introduced into the cavity C via gas inlets 2a and 2b. The dragged out gas mixture leaves the cavity C at an annular gas outlet 4. Unfortunately, a small portion of the gaseous zinc is deposition on the window WI of the aperture AP. To clean the window periodically, the inert gas inserted via the gas inlet 2b is added with a small amount of carbon monoxide in the range of 1 to 10 vol% of the gas flow. The gas flow is injected towards the window WI so that the carbon monoxide content of the gas flow is immediately interacting with the deposited zinc oxide. The zinc oxide is reducedto zinc which has a higher volatility than the zinc oxide itself at the elevated temperature in the cavity C. The window WI is therefore kept sufficiently hot to enable the reaction between the injected carbon monoxide and the zinc oxide on the inner surface, in this example the window WI.

From this example, the general teaching of the present invention can easily be understood. The surface to be cleaned *in situ* has to be maintained at temperature sufficiently hot to allow for a reaction between the injected gas flow or a component contained in the injected gas flow and the chemical substance deposited on the inner surface. Of course, a gas or a gas mixture has to be used that masters the desired reaction in order to generate a reaction product having a higher volatility than the deposited chemical substance. Additionally, due to the injection of the gas or the gas mixture towards the inner surface to be cleaned, the gas or the gas mixture is brought sufficiently into contact with the surface to be cleaned. Therefore, it can be easily understood that a very broad variety of applications for the present invention exists, such as the removal of organic compounds from the inner surface by injecting a portion of hot water steam or the removal of other metals, such as molybdenum or osmium, from the inner surface by injecting a portion of hot oxygen.

## Claims

1. Reactor (R) for hot thermal or thermo-chemical material processes converting a raw material at least partially into a desired product, comprising:
a) a cavity (C) having a hot inner surface; said cavity (C) being disposed in a containment can (1),
b) said cavity (C) having at least one gas inlet (2) and at least one gas outlet (4),
c) a feeder mechanism (SF) for supplying the raw material subject to the thermal or thermo-chemical material process;
d) said at least one gas inlet (2) is formed for injecting a a gas flow towards at least a part of the hot inner surface; and
e) the gas or at least one component thereof is chosen to convert the an unddesired product into a compound having a higher volatility at reaction temperature than the product that deposited on the window or any surface where deposition is not wanted..

2. Reactor (R) according to claim 1,
**characterized in that**
said at least part of the hot inner surface is an aperture (AP, WI) for allowing optical access to the cavity (C).

3. Reactor (R) according to claim 2,
**characterized in that**
the aperture (AP, WI) is enclosed by a hot quartz reactor window.

4. Reactor (R) according to claims 2 or 3,
**characterized in that**,
the aperture (AP, WI) is used to insert the external radiation heat into the cavity (C).

5. Reactor (R) according to any one of the preceding claims,
**characterized in that**,
the raw material comprises zinc oxide and the gas comprises carbon monoxide.

6. Reactor (R) according to any one of the preceding claims 1 to 5, **characterized in that**
the raw material comprises a component selected from a group consisting of molybdenum , osmium, or organic materials from for example the treatment of biomass or crude oil, coal, etc. and the gas comprises oxygen thus converting the metals or organic materials to compound that volatilize off the surface.

7. Reactor (R) according to any of the preceding claims 1 to 5, **characterized in that**
the raw material comprises organic compounds and the gas comprises water vapour or oxygen.

8. Reactor (R) according to any of the proceding claims,
**characterized in that**
the gas flow is injected continuously or periodically during the hot thermal or thermo-chemical material process.

9. Reactor (R) according to any of the preceding claims 1 to 7, **characterized in that**
the gas flow is injected as a rinsing gas when the hot thermal or thermo-chemical material process is interrupted.

10. A method for cleaning a hot inner surface of a reactor (R) used for hot thermal or thermo-chemical material processes converting a raw material at least partially into a desired product, said method comprising:
a) providing a cavity (C) having a hot inner surface; said cavity (C) being disposed in a containment can (1),
b) providing said cavity (C) having at least one gas inlet (2) and at least one gas outlet (4),
c) providing a feeder mechanism (SF) for supplying the raw material subject to the thermal or thermo-chemical material process;
d) forming said at least one gas inlet (2) for injecting a gas flow towards at least a part of the hot inner surface; and
e) choosing the gas or at least one component thereof for converting the desired product into a compound having a higher volatility at reaction temperature than the un desired product that formed on an undesired surface such as a window.
